# EUROPÄISCHE PATENTSCHRIFT

(11) **EP 2 123 391 B1**
(45) Veröffentlichungstag und Bekanntmachung des Hinweises auf die Patenterteilung: **19.04.2017**
(21) Anmeldenummer: 09006691.1
(22) Anmeldetag: 19.05.2009
(51) Int. Cl.: F16C 35/00, F16C 29/06, B23P 9/02, F16C 29/00

(54) **VERFAHREN ZUR HERSTELLUNG EINES LINEARLAGERGEHÄUSES**
METHOD FOR MANUFACTURING A LINEAR BEARING HOUSING
PROCÉDÉ DE FABRICATION D'UN LOGEMENT DE PALIER LINÉAIRE

(30) Priorität: 24.05.2008 DE 102008025039
(43) Veröffentlichungstag der Anmeldung: 25.11.2009
(73) Patentinhaber: Aktiebolaget SKF, 415 50 Göteborg (SE)
(72) Erfinder: Andersson, Leif, 97711 Maßbach (DE); Gronert, Andreas, 97506 Grafenrheinfeld (DE); Hierl, Georg, 97422 Schweinfurt (DE); Namyslo, Dominic, 97503 Gädheim (DE); Stahl, Erwin, 97714 Oerlenbach-Rottershausen (DE)
(74) Vertreter: Schonecke, Mitja

(56) Entgegenhaltungen:
- EP-A1- 1 422 384
- JP-A- 9 155 734
- JP-A- 2003 205 456
- US-A- 1 402 508
- US-A- 4 005 591
- US-A- 5 339 523
- US-A1- 2002 121 020
- US-A1- 2005 000 077
- US-B1- 6 212 927

## Beschreibung

Die Erfindung betrifft ein Verfahren zur Herstellung eines Linearlagergehäuses, das mindestens eine zylindrische Bohrung zur Aufnahme eines Wälzelements aufweist, wobei das Linearlagergehäuse aus einem stranggepressten Abschnitt besteht. Linearlagergehäuse dieser Art sind im Stand der Technik hinlänglich bekannt. Sie bestehen häufig aus einem stranggepressten Profil, wobei beim Strangpressen zylindrische Bohrungen erzeugt werden, die zur Aufnahme von Kugelbüchsen dienen. Damit die Kugelbüchsen exakt in den Bohrungen des Gehäuses sitzen, müssen die Bohrungen nach deren Einbringen nachgearbeitet werden. Entweder wird der genaue Bohrungsdurchmesser mit einer Reibahle erzeugt oder es erfolgt ein Ausspindeln der Bohrung. In beiden Fällen ist ein Mittenrauwert (Rₐ) von 1,8 µm in der Regel nicht unterschreitbar. D. h. bislang müssen die Bohrungen für die Aufnahme der Kugelbüchsen aufwändig mechanisch gefertigt (stranggepresst oder gebohrt) und dann ausgespindelt oder gerieben werden.

Das Ausspindeln bzw. Reiben der Bohrungen ist sowohl zeitaufwändig als auch teuer, jedoch erforderlich, um eine hohe Genauigkeit der Bohrung und eine möglichst glatte Bohrungsoberfläche zu erzielen. Nachteilig ist ferner, dass für diese Operationen Bearbeitungsmaschinen benötigt werden, die genau arbeiten und entsprechend teuer sind.

Aus der GB 151 183 A ist es bekannt, ein Maschinenteil mit einer Bohrung, die genau zu einem anderen Maschinenteil passen muss, dadurch herzustellen, dass eine Kugel mit Übermaß durch die vorgefertigte Bohrung gepresst wird. Für die Bearbeitung von Bohrungen durch spanloses Verformen schlagen auch die DE 36 01 541 A1, die CH 638 126 A5, die US 3 021 596 A und die US 1 722 389 A Lösungen vor. Weitere Verfahren zur Herstellung einer kalibrierten Oberfläche offenbaren die US 4 005 591 A und die US 2002/121020 A1.

Der Erfindung liegt daher die **Aufgabe** zu Grunde, ein Verfahren zu schaffen, mit den eine hohe Oberflächengüte der Bohrungen des Linearlagergehäuses erreichbar ist, wobei dies in wirtschaftlicher Weise möglich werden soll, d. h. in kurzer Zeit und unter Einsatz kostengünstiger Fertigungsmittel. Ferner soll ein Linearlagergehäuse mit einer hohen Genauigkeit der Bohrung zur Verfügung gestellt werden, die sich durch einen geringen Mittenrauwert auszeichnet.

Die Lösung dieser Aufgabe durch die Erfindung ist dadurch gekennzeichnet, dass das Verfahren die Schritte aufweist:
a) Einbringen der mindestens einen zylindrischen Bohrung in das Linearlagergehäuse, wobei die Bohrungen durch den Strangpressvorgang erzeugt werden und wobei der Durchmesser der Bohrung einem Nennmaß entspricht;
b) Hindurchdrücken eines Kalibrierelements in Form einer Kugel durch die zylindrische Bohrung, wobei das Kalibrierelement eine kreisförmige Projektion aufweist, deren Durchmesser geringfügig größer als das Nennmaß der Bohrung ist, wobei der Durchmesser der Kugel zwischen 100,1 % und 102 % des Nennmaßes der Bohrung beträgt, wobei das Hindurchdrücken der Kugel durch die Bohrung unter Zugabe eines Schmiermittels erfolgt und wobei ein Mittenrauwert (Rₐ) von weniger als 0,1 µm in der Bohrung erzeugt wird.

Damit kommt es beim Hindurchpressen des Kalibrierelements durch die Bohrung zu einer plastischen Verformung der Oberfläche der Bohrung, wodurch diese nicht nur hinsichtlich ihres Durchmessers kalibriert wird, sondern auch einen geringen Mittenrauwert (Rₐ) erhält.

Das Material und/oder die Oberflächenhärte des Kalibrierelements werden dabei mit Vorteil so gewählt, dass es härter ist als die Oberfläche der Bohrung.

Das Kalibrierelement besteht bevorzugt aus Stahl. Es kann einer Oberflächenhärtung oder einer Durchhärtung unterzogen sein.

Bewährt hat es sich auch, wenn das Kalibrierelement aus Keramik besteht.

Bevorzugt liegt der Mittenrauwert (Rₐ) zwischen 0,01 und 0,05 µm.

Das Linearlagergehäuse kann aus Leichtmetall bestehen, insbesondere aus Aluminium, aus Magnesium oder aus Messing. Es ist auch möglich, dass es aus Kupfer besteht. Auch eine Fertigung aus Stahl ist möglich.

Das in die Bohrungen des Linearlagergehäuses eingesetzte Wälzelement ist bevorzugt eine Kugelbüchse. Diese kann mindestens einen endlosen Kugelumlauf aufweisen.

Die Erfindung stellt also auf das Kalibrieren der Bohrungen des Linearlagergehäuses bevorzugt mittels einer Kugel ab. Durch die stranggepresste oder vorgebohrte Bohrung wird mittels einer Schiebevorrichtung eine Kugel mit einem gewählten Kalibrierdurchmesser gepresst. Hierdurch wird die Bohrung durch Materialverformung (Materialverdrängung) auf den gewünschten Passungsdurchmesser mit einer sehr guten Oberflächengüte und geringen Formabweichungen gebracht, so dass die Funktion des entsprechenden Linearlagers nach dem Einpressen der Kugelbüchse gewährleistet ist.

Das Verfahren kann bei allen verformbaren Materialien eingesetzt werden (bei Aluminium, Stahl, Messing, Kupfer etc.).

Es können hierdurch Durchmesser im Genauigkeitsbereich der Qualität 6 bis 7 erreicht werden.

Damit ist eine kostengünstige Möglichkeit geschaffen, um Bohrungen mit ausreichender Genauigkeit für den Einsatz in Linearlagern herzustellen. Die Bohrungen müssen nicht mehr aufwändig mechanisch gebohrt und ausgespindelt bzw. gerieben werden.

Daher ist kein hochwertiger Maschinenpark mehr erforderlich, die Fertigung kann schnell und kostengünstig erfolgen, wobei dennoch konstante hohe Genauigkeiten sichergestellt werden können.

Der Erfindungsvorschlag eignet sich sowohl bei speziellen Lagersystemen als auch bei Standardgehäusen für Linearlager.

In der Zeichnung ist ein Ausführungsbeispiel der Erfindung dargestellt. Es zeigen:
- Fig. 1: in perspektivischer Ansicht ein Linearlagergehäuse mit zwei Bohrungen zur Aufnahme von Kugelbüchsen vor dem Hindurchpressen zweier Kugeln durch die beiden Bohrungen und
- Fig. 2: das fertig bearbeitete Linearlagergehäuse in perspektivischer Ansicht, in das Kugelbüchsen in die Bohrungen montiert wurden bzw. werden.

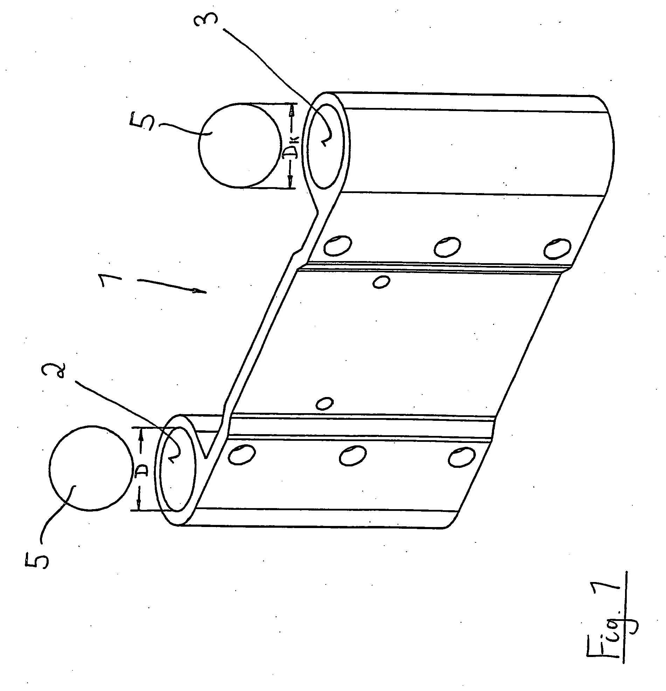

In Fig. 1 ist ein Linearlagergehäuse 1 zu sehen, das aus einem stranggepressten Profil besteht. Beim Strangpressen werden zwei Bohrungen 2 und 3 ausgeformt, die zur Aufnahme jeweiliger Kugelbüchsen vorgesehen sind. Das Strangpressverfahren erlaubt die Herstellung der Bohrungen mit einem definierten Nenndurchmesser D.

Um die Bohrungen 2, 3 auf ein genaues Endmaß zu kalibrieren, so dass die in die Bohrungen 2, 3 einzusetzenden Kugelbüchsen passgenau sitzen, müssen die Bohrungen 2, 3 nachgearbeitet werden, was im Stand der Technik durch Ausspindeln oder Reiben erfolgt.

Erfindungsgemäß wird indes so vorgegangen, dass ein Kalibrierelement 5 - im Ausführungsbeispiel in Form einer Kugel - durch die Bohrung 2, 3 in deren Achsrichtung hindurch gepresst wird. Die Kugel 5 hat dabei einen Durchmesser D_{K}, der geringfügig größer ist als der Nenndurchmesser D.

Die Kugel 5 hat dabei eine Oberflächenhärte, die größer ist als die Oberflächenhärte der Bohrungen 2, 3. Weiterhin ist die Kugel mit einer hohen Oberflächengüte versehen, d. h. ihre Oberfläche ist sehr glatt ausgeführt.

Beim Hindurchpressen der Kugel 5 durch die Bohrungen 2, 3 mit einer nicht dargestellten Drückvorrichtung wird daher - insbesondere wenn dem Prozess ein Schmiermittel zugegeben wird - ein genau kalibrierter Bohrungsdurchmesser erzeugt sowie eine sehr glatte Oberfläche mit einem Mittenrauwert (Rₐ) zwischen 0,01 und 0,05 µm.

Der Mittenrauwert beschreibt dabei die Rauigkeit der Oberfläche. Zur Ermittlung dieses Wertes wird die Oberfläche auf einer definierten Messstrecke abgetastet und sämtliche Höhen- und Tiefenunterschiede der rauen Oberfläche aufgezeichnet. Nach der Berechnung des bestimmten Integrals dieses Rauigkeitsverlaufes auf der Messstrecke wird abschließend dieses Ergebnis durch die Länge der Messstrecke dividiert. Die Spanne der Rauigkeitswerte reicht typischerweise von 25µm bei sehr rauen Flächen mit spürbaren Riefen bis hin zu 0,1 µm mit nicht mehr sichtbaren Bearbeitungsspuren. Vorliegend wird sogar ein Wert erzeugt, der noch deutlich unter 0,1 µm liegt. Der arithmetische Mittenrauwert Rₐ ist nach DIN EN ISO 4287:1998 genormt.

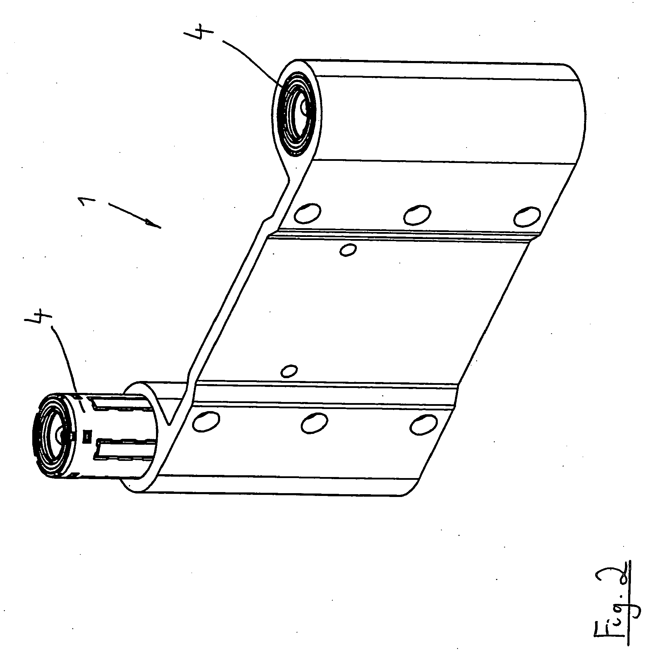

In Fig. 2 ist zu sehen, wie in die fertig kalibrierten Bohrungen 2, 3 Wälzelemente in Form von Kugelbüchsen 4 eingesetzt (eingepresst) werden (linker Bildbereich) bzw. worden sind (rechter Bildbereich).

Die Kugelbüchsen 4 haben mehrere endlose Kugelumlaufbahnen, in denen in bekannter Weise Kugeln geführt werden. In den Kugelbüchsen 4 laufen wiederum nicht dargestellte Achsen bzw. Wellen, so dass sich die gewünschte Linearlagerfunktion ergibt.

### Bezugszeichenliste

- 1: Linearlagergehäuse
- 2: Bohrung
- 3: Bohrung
- 4: Wälzelement (Kugelbüchse)
- 5: Kalibierelement (Kugel)

- D: Nennmaß des Bohrungsdurchmessers
- D_{K}: Durchmesser des Kalibrierelements (Kugeldurchmesser)
- Rₐ: Mittenrauwert

## Patentansprüche

1. Verfahren zur Herstellung eines Linearlagergehäuses (1), das mindestens eine zylindrische Bohrung (2, 3) zur Aufnahme eines Wälzelements (4) aufweist, wobei das Linearlagergehäuse (1) aus einem stranggepressten Abschnitt besteht, **dadurch gekennzeichnet, dass** das Verfahren die Schritte aufweist:
a) Einbringen der mindestens einen zylindrischen Bohrung (2, 3) in das Linearlagergehäuse (1), wobei die Bohrungen (2, 3) durch den Strangpressvorgang erzeugt werden und wobei der Durchmesser der Bohrung (2, 3) einem Nennmaß (D) entspricht;
b) Hindurchdrücken eines Kalibrierelements (5) in Form einer Kugel durch die zylindrische Bohrung (2, 3), wobei das Kalibrierelement (5) eine kreisförmige Projektion aufweist, deren Durchmesser (D_{K}) geringfügig größer als das Nennmaß (D) der Bohrung (2, 3) ist, wobei der Durchmesser (D_{K}) der Kugel (5) zwischen 100,1 % und 102 % des Nennmaßes (D) der Bohrung (2, 3) beträgt, wobei das Hindurchdrücken der Kugel (5) durch die Bohrung (2, 3) unter Zugabe eines Schmiermittels erfolgt und wobei ein Mittenrauwert (Rₐ) von weniger als 0,1 µm in der Bohrung erzeugt wird.

2. Verfahren nach Anspruch 1, **dadurch gekennzeichnet, dass** das Material und/oder die Oberflächenhärte des Kalibrierelements (5) so gewählt wird, dass es härter ist als die Oberfläche der Bohrung (2, 3).

3. Verfahren nach Anspruch 1 oder 2, **dadurch gekennzeichnet, dass** das Kalibrierelement (5) aus Stahl besteht.

4. Verfahren nach Anspruch 3, **dadurch gekennzeichnet, dass** das Kalibrierelement (5) einer Oberflächenhärtung unterzogen ist.

5. Verfahren nach Anspruch 3, **dadurch gekennzeichnet, dass** das Kalibrierelement (5) einer Durchhärtung unterzogen ist.

6. Verfahren nach Anspruch 1 oder 2, **dadurch gekennzeichnet, dass** das Kalibrierelement (5) aus Keramik besteht.

7. Verfahren nach einem der Ansprüche 1 bis 6, **dadurch gekennzeichnet, dass** ein Mittenrauwert (Rₐ) zwischen 0,01 und 0,05 µm in den Bohrungen (2, 3) erzeugt wird.

8. Verfahren nach einem der Ansprüche 1 bis 7, **dadurch gekennzeichnet, dass** das Linearlagergehäuse aus Leichtmetall besteht, insbesondere aus Aluminium, aus Magnesium oder aus Messing.

9. Verfahren nach einem der Ansprüche 1 bis 7, **dadurch gekennzeichnet, dass** das Linearlagergehäuse aus Kupfer oder Stahl besteht.

## Claims

1. Method for producing a linear bearing housing (1) which comprises at least one cylindrical borehole (2, 3) for receiving a rolling element (4), wherein the linear bearing housing (1) consists of an extruded portion, **characterized in that** the method comprises the following steps:
a) making the at least one cylindrical borehole (2, 3) in the linear bearing housing (1), wherein the boreholes (2, 3) are produced by the extrusion process, and wherein the diameter of the borehole (2, 3) corresponds to a nominal dimension (D);
b) pressing a calibrating element (5) in the form of a ball through the cylindrical borehole (2, 3), wherein the calibrating element (5) has a circular projection, the diameter (D_{K}) of which is slightly greater than the nominal dimension (D) of the borehole (2, 3), wherein the diameter (D_{K}) of the ball (5) measures between 100.1% and 102% of the nominal dimension (D) of the borehole (2, 3), wherein the ball (5) is pressed through the borehole (2, 3) with the addition of a lubricant, and wherein a mean roughness value (Rₐ) of less than 0.1 µm is generated in the borehole.

2. Method according to Claim 1, **characterized in that** the material and/or the surface hardness of the calibrating element (5) is selected in such a way that it is harder than the surface of the borehole (2, 3).

3. Method according to Claim 1 or 2, **characterized in that** the calibrating element (5) consists of steel.

4. Method according to Claim 3, **characterized in that** the calibrating element (5) is subjected to surface hardening.

5. Method according to Claim 3, **characterized in that** the calibrating element (5) is subjected to full hardening.

6. Method according to Claim 1 or 2, **characterized in that** the calibrating element (5) consists of ceramic.

7. Method according to one of Claims 1 to 6, **characterized in that** a mean roughness value (Rₐ) of between 0.01 and 0.05 µm is generated in the boreholes (2, 3).

8. Method according to one of Claims 1 to 7, **characterized in that** the linear bearing housing consists of light metal, in particular of aluminium, of magnesium or of brass.

9. Method according to one of Claims 1 to 7, **characterized in that** the linear bearing housing consists of copper or steel.

## Revendications

1. Procédé de fabrication d'un logement de palier linéaire (1), qui présente au moins un alésage (2, 3) cylindrique destiné à recevoir un élément de roulement (4), le logement de palier linéaire (1) se composant d'un tronçon extrudé, **caractérisé en ce que** le procédé présente les étapes suivantes :
a) mise en place de l'alésage (2, 3) cylindrique au moins au nombre de un dans le logement de palier linéaire (1), les alésages (2, 3) étant produits par le processus d'extrusion, et le diamètre de l'alésage (2, 3) correspondant à une cote nominale (D) ;
b) pression exercée sur un élément d'étalonnage (5) sous la forme d'une bille à travers l'alésage (2, 3) cylindrique, l'élément d'étalonnage (5) présentant une projection circulaire dont le diamètre (D_{K}) est légèrement supérieur à la cote nominale (D) de l'alésage (2, 3), le diamètre (D_{K}) de la bille (5) étant compris entre 100,1% et 102 % de la cote nominale (D) de l'alésage (2, 3), la pression exercée sur la bille (5) à travers l'alésage (2, 3) s'effectuant avec l'apport d'un lubrifiant, et une rugosité moyenne (Rₐ) inférieure à 0,1 µm étant produite dans l'alésage.

2. Procédé selon la revendication 1, **caractérisé en ce que** le matériau et/ou la dureté superficielle de l'élément d'étalonnage (5) est choisi (e) de telle sorte qu'il est plus dur que la surface de l'alésage (2, 3).

3. Procédé selon la revendication 1 ou 2, **caractérisé en ce que** l'élément d'étalonnage (5) est composé d'acier.

4. Procédé selon la revendication 3, **caractérisé en ce que** l'élément d'étalonnage (5) est soumis à une trempe superficielle.

5. Procédé selon la revendication 3, **caractérisé en ce que** l'élément d'étalonnage (5) est soumis à une trempe à coeur.

6. Procédé selon la revendication 1 ou 2, **caractérisé en ce que** l'élément d'étalonnage (5) est composé de céramique.

7. Procédé selon l'une des revendications 1 à 6, **caractérisé en ce qu'**une rugosité moyenne (Rₐ) comprise entre 0,01 et 0,05 µm est produite dans les alésages (2, 3).

8. Procédé selon l'une des revendications 1 à 7, **caractérisé en ce que** le logement de palier linéaire est composé de métal léger, en particulier d'aluminium, de magnésium ou de laiton.

9. Procédé selon l'une des revendications 1 à 7, **caractérisé en ce que** le logement de palier linéaire est composé de cuivre ou d'acier.
